# EUROPEAN PATENT APPLICATION

(11) **EP 2 684 716 A1**
(43) Date of publication of application: **15.01.2014**
(21) Application number: 13176505.9
(22) Date of filing: 15.07.2013
(51) Int. Cl.: B60H 1/00, B60H 1/32, B60P 3/20

(54) **A freight transport vehicle for climate-controlled transport**

(30) Priority: 13.07.2012 NL 2009184
(71) Applicant: H.OPDAM MANAGEMENT B.V., 1075 BW Amsterdam (NL)
(72) Inventor: Opdam, Joannes Jozef Gerardus, 1075 BW Amsterdam (NL); Quaak, Peter, 3524 RW Utrecht (NL)
(74) Representative: Altenburg, Bernardus Stephanus Franciscus

(57) **Abstract**

The invention concerns a freight transport vehicle (100) for climate-controlled transport of cargo, the freight transport vehicle having a cargo space (101). It also contains a longitudinally extending air channel (122). According to the invention the longitudinally extending air channel has
- an inlet opening (153) in direct fluid connection with the cargo space; and
- a further fan (115) for passing air from the cargo space via said inlet opening through the longitudinally extending air channel to at least part of the air vent area back into the cargo space.

## Description

The present invention relates to a freight transport vehicle for climate-controlled transport of cargo, the freight transport vehicle having a front end and a back end, the freight transport vehicle comprising
- a cargo space defined by
   - a floor,
   - a first longitudinally extending upright wall,
   - a second longitudinally extending upright wall,
   - a first transversely extending upright wall away from the back end,
   - a second transversely extending upright wall at a distance from the first transversely extending upright wall and away from the front end, and
   - a ceiling;
- a longitudinally extending air channel provided at the ceiling inside the cargo space and having
   - an inlet;
   - an air vent area for passing air from the longitudinally extending air channel into the cargo space; and
- a fan for circulating air through the cargo space.

A freight transport vehicle according to the pre-amble is known from DE3817365 (1989). Freight transport vehicles with a climate-control system are well-known in the art. The freight transport vehicle may be a motorized vehicle such as a lorry, or a pulled vehicle such as trailer for a truck. Such a transport vehicle is used for transporting freight that has to be kept at a temperature different from the ambient temperature. Usually, the vehicle will be used to transport freight that has to be kept cool, or even frozen. However, it is feasible that the cargo has to be kept at a higher temperature than the ambient temperature, e.g. above freezing point in very cold climates. For reasons of convenience only the present application will refer to cooling only, but the present invention is not limited to transport vehicles with a climate-control system comprising a cooling apparatus such an airco. Two aspects are of importance. First and foremost the cargo, usually perishable goods such as food or flowers, have to be kept at a temperature within a range specific for that cargo. Secondly, energy consumption is a concern, not in the least because the airco of a climate-control system will usually be powered by the engine of the freight transport vehicle or towing the freight transport vehicle, and such an engine in general runs on costly fossil fuel such as diesel. It is important that the temperature distribution in the cargo space is as homogenous as possible. An even distribution is affected by opening of a door giving access to the cargo space (usually at the back or sometimes at the side of the cargo space), and by heat exchange via the six walls defining the cargo space, in particular the ceiling and the two longitudinally extending upright walls. For a commercially available trailer this has been attempted to be remedied the use of a longitudinally extending air channel.

In operation, a only modest improvement in homogeneity of the temperature distribution in the cargo space is achieved.

It is the object of the present invention to provide a transport vehicle with a climate-control system that allows for an improved homogeneity of the temperature distribution in the climate-controlled cargo space section, and allows for reduced energy consumption.

To this end, a freight transport vehicle according to the preamble is **characterized in that** the longitudinally extending air channel has - an inlet opening in direct fluid connection with the cargo space; and - a further fan for passing air from the cargo space via said inlet opening through the longitudinally extending air channel to at least part of the air vent area back into the cargo space.

This allows the circulation of air inside the trailer to be performed independent of the climate-control system, if present. The air is distributed more efficiently and homogeneously throughout the cargo space. This reduces the chance of hot spots, i.e. a more homogenous temperature distribution is achieved. Currently, cargo is transported where the airco is set to a lower temperature than necessary to make sure that hot spots are below the required temperature. This means that the energy efficiency leaves to be desired. Because hot spots can be avoided much better with the present invention, a savings in energy can be achieved. This may amount to a significant monetary saving, because fossil fuel is not cheap and generating electricity using a combustion engine not very efficient. Also, the present invention allows for energy savings because the cargo can be put into the cargo space at a lower temperature and/or with PCM materials, reducing the need for expensive fuel to power the climate control system. The freight transport vehicle may not need a cooling apparatus, saving investment cost. The word "direct" in the term "direct fluid connection with the cargo space" means that if there is a climate-control system, there is a bypass. That is, at least part of the air taken from the cargo space is not subjected to heat exchange (ignoring heat from a fan, whose purpose isn't to act as a heat exchanger) before it is introduced in the longitudinally extending air channel. The longitudinally extending air channel may be composed of consecutive air channel sections. The flow-through area of at least one longitudinally extending channel may be co-defined by the ceiling. In general, there will be at least 10 holes, preferably at least 20 holes, distributed over the length of a longitudinally extending air channel to serve as air vent areas. The further fan for passing air from the cargo space will in general be at the inlet opening of the longitudinally air channel. For excellent avoidance of hot spots, of a longitudinally extending air channel having air vent openings in a zone defined by a longitudinally extending upright wall, the first (frontmost) transversely extending upright wall and the second transversely extending upright wall which zone has a width of half the distance between the two longitudinally extending upright walls from the longitudinally extending upright wall, at least 35% of the air vent area (i.e. the surface area of openings) and more preferably at least 45% of the air vent area, is within 25 cm of said longitudinally extending upright wall. Thus the air flows downwardly along the longitudinally extending upright wall is promoted, intercepting heat exchange between cargo and said longitudinally extending upright wall. It is preferred that this also goes for a second zone defined by the longitudinally extending upright wall opposite of said longitudinally extending upright wall. It is more preferred if at least 35% of the air vent area (and more preferably at least 45% of the air vent area) is within 20 cm of said longitudinally extending upright walls.

US2923223 (1960) discloses a passenger transport vehicle, comprising an air conditioning system having an inlet connected to the outside of the vehicle, and a pair of ducts longitudinally extending in the vehicle connected to the air conditioning system. There is also a mixing duct for mixing air from a passenger compartment with the air from the air conditioning system. The mixed air is supplied to the passenger compartiment.

According to a favourable embodiment, the freight transport vehicle comprises a climate-control system.

The climate-control system is for example a cooling apparatus for transport of cargo that has to be kept relatively cool with respect to the outside of the freight transport vehicle. The climate-control system may be a system where a heat exchange medium is passed through tubes for heat exchange with the cargo space, e.g via tubes in at least one of the walls defining the cargo space. As another more common example, the climate-control system has an air inlet in fluid connection with the cargo space (or first cargo space section) and an air outlet.

According to a favourable embodiment, in projection of the flow-through area of longitudinally extending air channels on the ceiling at least 40% of the surface area of the ceiling of the cargo space is covered, more preferably at least 55%, and even more preferably at least 70%.

Thus heat exchanged via the ceiling of the freight transport vehicle can be intercepted that would otherwise cause temperature differences in the cargo space. This allows cargo to be transported over longer distances with little or no need for cooling if the cargo is introduced at a relatively low temperature. The cargo will homogeneously become warmer, but still within the allowed range. This is very advantageous, as hardly any or no fuel (such as diesel) is required for cooling. The further improved homogeneity allows the freight transport vehicle to cover larger distances.

According to a favourable embodiment, the air hole surface area present in a first longitudinally extending span of 2 meters increases from the front end of the freight transport vehicle to the back end thereof.

That is, further spans of two meters contain progressively larger air hole surface area. This helps to ensure that the specified flow rates of air along the length of the cargo space are achieved.

According to a favourable embodiment, at least one of the longitudinally extending air channels comprises a phase change material.

The PCM material is provided in a heat-exchange relationship with the lumen of the longitudinally extending air channel and can be used to maintain the temperature in the cargo space and or to reduce temperature fluctuations of air flowing out of the air holes of the longitudinally extending air channel. The PCM material will generally be provided distributed over at least 15% of the length of the longitudinally extending air channel, preferably at least 30%, more preferably at least 50% and even more preferably at least 70% of the length of the longitudinally extending air channel, said length starting at the inlet of said longitudinally extending air channel. Typically, the amount of PCM material will be at least 0.5 kg per meter length of the vehicle.

According to a favourable embodiment, the longitudinally extending air channel is a longitudinally extending, flexible air channel.

Such an air channel may be easily retrofitted in an existing or used in existing designs of transport vehicles without redesign thereof. It may be used in combination with a compartmentalisation door, as discussed below. A longitudinally extending air channel having a hemi-circular cross-section at the ceiling is known in the art. The longitudinally air channel is made of a long piece of flexible sheet material (plastic), attached with the longitudinal edges thereof to the ceiling of the cargo space. This makes it possible that the compartmentalisation door, if positioned vertically to create the first and second cargo sections, presses the flexible sheet material against the ceiling, preventing air to pass through the longitudinally extending air channel beyond the compartmentalisation door, saving energy because only one (usually the first i.e. frontmost) cargo section is climate-controlled, which is what the compartmentalisation door is for.

According to a favourable embodiment, the longitudinally extending air channel comprises
- at least one longitudinally extending spacer element at the ceiling, and
- a flexible sheet under tension using said at least one longitudinally extending spacer element as a support, a flow-through area of the longitudinally extending air channel being defined by the at least one longitudinally extending spacer element and the flexible sheet, wherein said flexible sheet comprises air holes in an area that is
   - next to the at least one longitudinally extending spacer element, and
   - parallel to the ceiling.

The air holes in the longitudinally extending air channel are substantially parallel to the ceiling because the sheet is taut, the risk of being caught by cargo is significantly reduced. Also, the air holes may be closer to the ceiling than the (lowest) air holes of the air channels in the trailer known in the art, which also reduces the risk of cargo being caught by a hole which event could result in damage to the air distribution channel (or cargo). It is important to realise that the fact that the flexible sheet is kept taught parallel to the ceiling helps to transport air to close to a compartmentalisation door if said compartmentalisation door is in an upright position, improving the temperature distribution in the first cargo space section, as will be discussed below. The expression that there is at least one longitudinally extending spacer element at the ceiling covers both the possibility of such a longitudinally extending spacer element as an integral part of the ceiling and the possibility of such a longitudinally extending spacer element fixed to the ceiling. The latter allows for easy retrofitting existing transport vehicles. If the air channel comprises only one spacer element, the flexible sheet will be extended towards and be connected to a longitudinally extending side wall.

According to a favourable embodiment, the ceiling is provided with leaf springs for pushing a longitudinally extending spacer element away from i) another longitudinally extending spacer element co-defining the particular longitudinally extending air channel or ii) a longitudinally extending upright wall to which the flexible sheet is connected.

This makes it easy to provide a ceiling with a longitudinally extending air channel. Also, when the compartmentalisation door pushes the flexible sheet towards the ceiling, the longitudinally extending spacer element can move towards the other longitudinally extending spacer element, which helps to allow the flexible sheet to be moved towards the ceiling. Preferably both longitudinally extending spacer elements are pushed away from each other.

According to a favourable embodiment, at least one of the longitudinally extending spacer elements is an inflated plastic tube.

Inflated tubes of flexible sheet material (plastic) that doesn't retain its shape if not inflated display excellent resilience, and allow the longitudinally extending air channels to be light and to be closed by a compartmentalisation door very effectively. A suitable material is textile-reinforced PVC.

According to a favourable embodiment, the freight transport vehicle comprises a compartmentalisation door and a longitudinally extending guide for moving said compartmentalisation door in said cargo space, wherein the compartmentalisation door can be used as a third transversally extending upright wall present between the first transversely extending upright wall and the second transversely extending upright wall so as to define
- a first cargo space section between the first transversely extending upright wall and the compartmentalisation door, and
- a second cargo space section between the compartmentalisation door and the second transversely extending upright wall;
a first air vent area being located closer to said front end than a second air vent area so as to allow the first cargo section to be ventilated if the compartmentalisation door is placed between the first air vent area and the second air vent area.

If the compartmentalisation door defines a first cargo section because it is in an upright position, the air is distributed efficiently through said first cargo section only because the first air vent area is within the first cargo section. Little or no air will be discharged through the second air vent area into the second cargo section. In practice, the upper edge of the compartmentalisation door will be provided with resilient material to improve the seal at the top of the compartmentalisation door and/or to avoid damage to the longitudinally extending air channel by the compartmentalisation door.

According to a possible embodiment, at least one longitudinally extending spacer element is a rigid longitudinal element; and in a vertical position the compartmentalisation door has an upper edge, said upper edge being provided with a recesses for individually receiving the at least one rigid longitudinally extending spacer element.

This makes it possible that the compartmentalisation door closes off the longitudinally extending air channel very effectively. The longitudinally extending spacer element may for example comprise a relatively rigid central core surrounded by resilient foam that helps to maintain the shape of the spacer elements and thus to maintain a well-defined longitudinally extending air channel. When the compartmentalisation door pushes the flexible sheet towards the ceiling, the flexible foam is compressed, which helps to allow the flexible sheet to be moved towards the ceiling.

According to a favourable embodiment, the freight transport vehicle comprises at least two of said longitudinally extending air channels, wherein two longitudinally extending air channels being adjacent to the two longitudinally extending upright walls are provided with a longitudinally extending row of air holes.

This results in a significant improvement of the homogeneity of the temperature distribution because air from the air channel is passed downwardly along the longitudinally extending upright walls. Thus, heat exchanged via the longitudinally extending upright walls of the freight transport vehicle is intercepted effectively that would otherwise cause temperature differences in the cargo space. As a compartmentalisation door will need in general two (or more) longitudinally extending guides, the space between such a guide and a longitudinally extending wall is in general not very wide and unsuitable for a conventional hemi-circular hanging air channel of flexible material. In contrast, in the present invention the guide may provide enhanced protection against damage to the two longitudinally extending air channels being adjacent to the two longitudinally extending upright walls. Each of the longitudinally extending air channels adjacent to the two longitudinally extending upright walls is provided with a further fan for passing air from the cargo space via the respective inlet opening of the longitudinally extending air channel into the cargo space.

The present invention will now be illustrated with reference to the drawing where
Fig. 1a shows longitudinal cross-sectional view of a trailer comprising a climate-control system;
Fig. 1b shows a top view of the trailer of Fig. 1a;
Fig. 2 shows a partial, transverse cross-sectional view through the trailer of Fig. 1;
Fig. 3 schematically shows a rear view of an embodiment of a longitudinally extending air channel mounted to a ceiling of the vehicle;
Fig. 4 shows a partial rear view on the longitudinally extending air channel of Fig. 3 closed by a compartmentalisation door;
Fig. 5 corresponds with Fig. 3, here provided with a PCM module;
Fig. 6 schematic top view of a trailer;
Fig. 7 shows a cross-sectional view of an alternative longitudinally extending air channel;
Fig. 8 shows a cross-sectional view of an alternative longitudinally extending air channel;
Fig. 9 shows a cross-sectional view of an alternative longitudinally extending air channel;
Fig. 10 corresponds to Fig. 2 and shows an alternative partial, transverse cross-sectional view through the trailer of Fig. 1;
Fig. 11 shows a cross-sectional view of an alternative longitudinally extending air channel; and
Fig. 12 shows a top view of an alternative trailer.

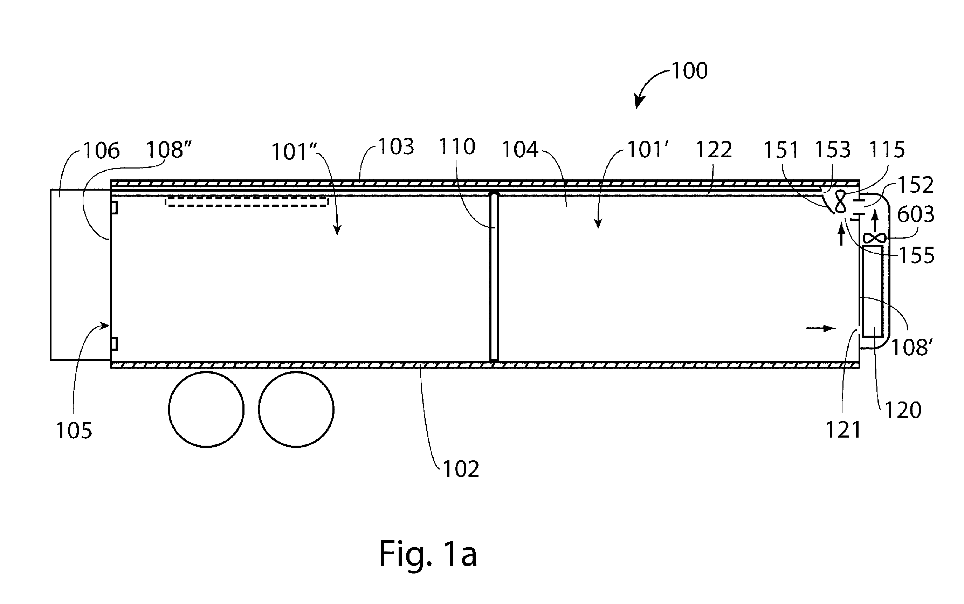

Fig. 1a shows a trailer 100 with a cargo space 101 defined by a floor 102, a ceiling 103, two longitudinally extending upright walls 104 (or side walls 104 for short), and two transversely extending, upright walls 108. One of the walls (in this case as is usual the transversely extending upright wall 108" at the back of the vehicle) is provided with an access opening 105 that can be closed with a cargo door 106. The trailer 100 of the embodiment discussed here is provided with a compartmentalisation door 110. This compartmentalisation door 110 can be moved inside the cargo space 101 over a significant percentage of the length of the cargo space 101 so as to divide said cargo space into a first cargo space section 101' and a second cargo space section 101". The compartmentalisation door 110 can be lifted (ghost outline) to end the compartmentalisation of the cargo space 101 and/or to give free access to the first cargo space section 101' during loading and/or unloading of cargo.

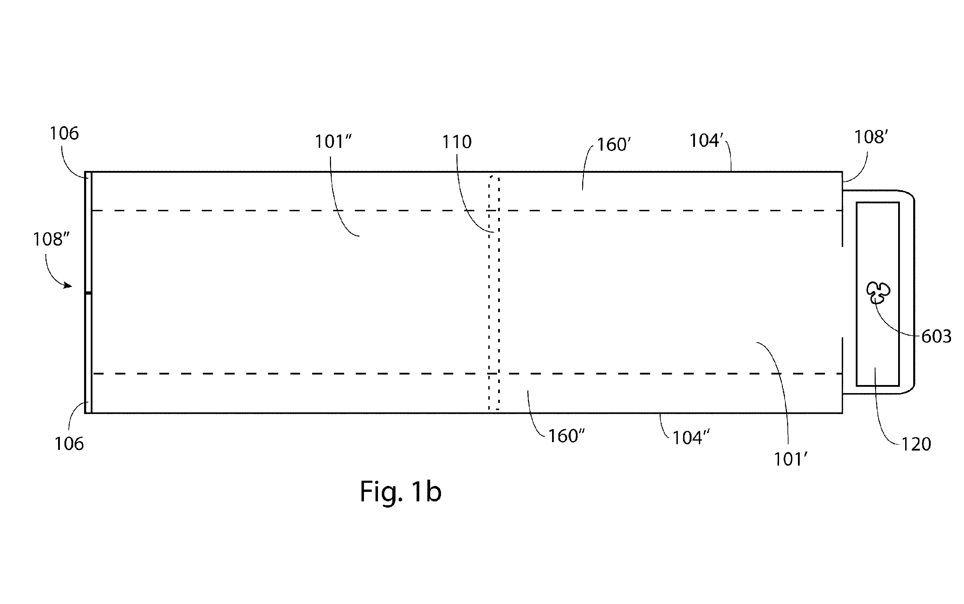

The ceiling 103 is an insulated ceiling 103 comprising polystyrene foam having a thickness of 10 cm. The same goes for the longitudinally extending side walls 104 and the frontmost transversely extending, upright wall 108. Such a trailer 100 is well suited for transport of cargo that has to be kept in a cooled or frozen state. To this end, the trailer 100 is provided with an airco 120. The airco 120 has an air inlet 121 close to the floor 102 and feeds refrigerated air to longitudinally extending channels 122 provided at the ceiling 103 of the trailer 100. The longitudinally extending channels 122 ensure that refrigerated air from the airco 120 is distributed over the length of the cargo space 101. If the compartmentalisation door 110 is in a vertical position (as shown in Fig. 1) so as to divide the cargo space 101 in sections as detailed above, the refrigeration is substantially limited to the first cargo space section 101' as will be explained below.

Fig. 1a also shows a bulkhead 151, an outlet opening 152 for the airco 120 and an inlet 153 for allowing air from the cargo space 101 via the bulkhead 151 into the longitudinally extending channel 122. These parts will be discussed later. For direct fluid connection, the bulkhead 151 has an opening 155 allowing for the passage of air from the cargo space 101 into the longitudinally extending channel 122.

Fig. 1b shows a top view of the trailer 100 of Fig. 1a. It shows in particular a first zone 160', defined by the first longitudinally extending upright wall 104', the first (frontmost) transversely extending upright wall 108' and compartmentalisation door 110 as the third transversely extending upright wall. Similarly, it shows a second zone 160" defined by the second longitudinally extending upright wall 104", the first (frontmost) transversely extending upright wall 108' and the compartmentalisation door 110 as the third transversely extending upright wall.

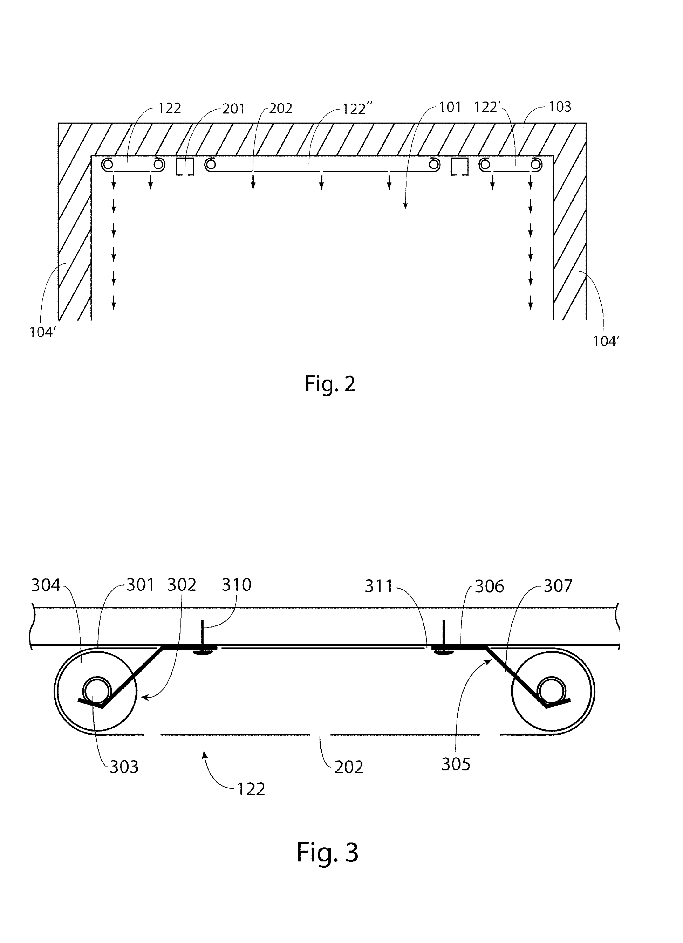

Fig. 2 shows a partial, transverse cross-sectional view through the trailer 100 of Fig. 1, detailing ceiling 103 which is provided with guides 201 for moving the compartmentalisation door 110. The guides 201 extend longitudinally through the cargo space 101.

The ceiling 103 is also provided with the longitudinally extending channels 122, in this case 3. The two longitudinally extending channels 122' adjacent to the side walls 104 are provided with a row of air holes 202 so as to provide a curtain of downward flowing air along said side walls 104 when the trailer 100 is in use. The central longitudinally extending channel 122" is also provided with air holes distributed over the length of said central longitudinally extending channel 122'. Thus the three longitudinally extending channels 122 are very effective at intercepting heat passing from outside the trailer 100 to the cargo space 101 that could result in local hot spots. Now this heat is passed on by the air throughout the (available) cargo space 101, avoiding local warming up of cargo close to the ceiling 103 and side walls 104.

The air holes 202 are parallel to the ceiling 103 and hence are unlikely to be caught by cargo being moved in the cargo space 101 during loading or unloading of the trailer. Also, the longitudinally extending channels 122 cover more than 70% of the surface area of the ceiling 103, thus providing excellent homogeneity of the temperature distribution in the cargo space 101.

Reference is made to Fig. 3. A longitudinally extending channel 122 used in a vehicle 100 according to the present invention, comprises a flexible sheet 301 provided with air holes 202. The flexible sheet 301 is kept taut by using spacer elements 302 comprising a metal tubular core 303 (backbone) and a sleeve of resilient foam 304. The metal tubular cores 303 are pressed towards the ceiling 103 and away from each other by resilient metal brackets 305 comprising a base 306 and an angled member 307 protruding from said base 306. The resilient metal brackets 305 are fixed to the ceiling 103 with, for example, screws 310.

In the embodiment shown here, the flexible sheet 301 is a tubular flexible sheet 301. For mounting a longitudinally extending channel 122 to the ceiling 103, the ceiling 103 is provided with resilient metal brackets 305 (leaf springs) at regular distances. At the side of the ceiling 103, the flexible sheet 301 may be provided with bracket holes 311 so as to allow the angled members 307 to pass through the bracket holes 311 and push agains the spacer elements 302, preferably against the metal tubular cores 303 thereof. This construction is light and can be removed for cleaning purposes, if desired. The flexible nature of the spacer element 302 is to allow the compartmentalisation door 110 to substantially close the longitudinally extending channels 122.

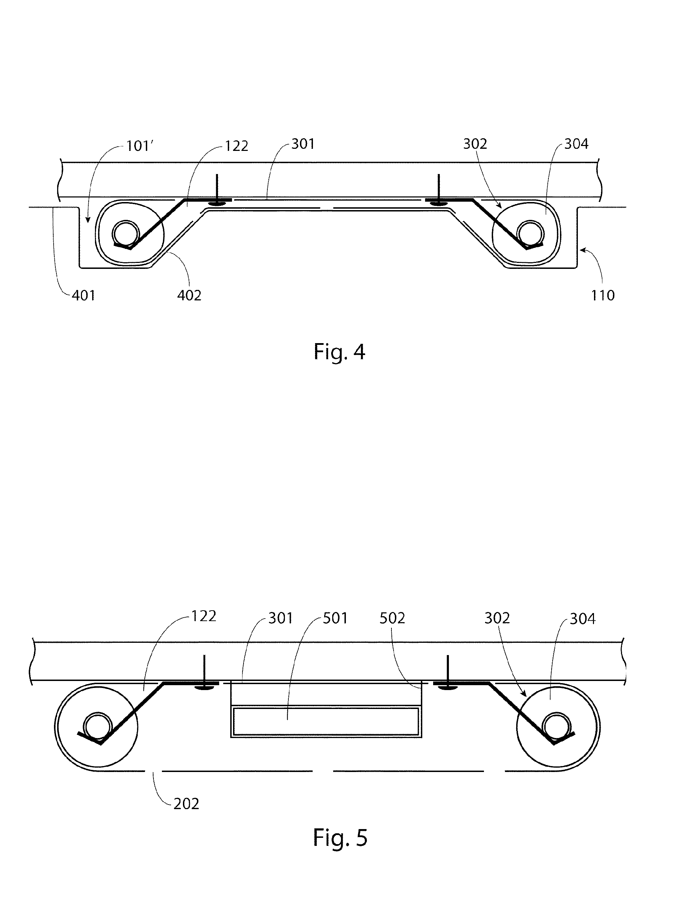

To save energy, the air from the airco 120 should be limited to the first cargo space section 101'. To this end, the compartmentalisation door 110 can substantially close the longitudinally extending channels 122 due to the flexible nature of the flexible sheet 301 and the resilient spacer elements 302, in particular the resilient foam 304. Fig. 4 shows the upper edge 401 of compartmentalisation door 110. The upper edge 401 is provided with recesses 402 for receiving the guides 201 and the spacer elements 302. When the compartmentalisation door 110 is placed in a vertical state, the upper edge 401 is pushed agains the flexible sheet 301 and the flow of air through the longitudinally extending air channel 122 past the compartmentalisation door 110 is substantially blocked.

Fig. 5 corresponds with Fig. 3 and shows cross-sectional view of the longitudinally extending channel 122 provided with a PCM module 501. This PCM module 501 is a metal container for Phase Change Material (PCM). Such a material is capable of storing/releasing large amounts of heat at a transition temperature (where the material changes phase, from liquid to solid or vice versa). The type of PCM used depends on the purpose of the vehicle. A suitable material for refrigerated trailer 100 is for example an aqueous salt solution.

The PCM module 501 could have been mounted to the ceiling 103, but in the embodiment shown in Fig. 5 it is hung by a rope structure 502 (netting) from the ceiling 103. This increases the surface area exposed to air passed through the longitudinally extending channel 122 and thus improves heat exchange. Also, the rope structure 502 still allows the longitudinally extending channel 122 to be closed by the edge 401 of the compartmentalisation door 110.

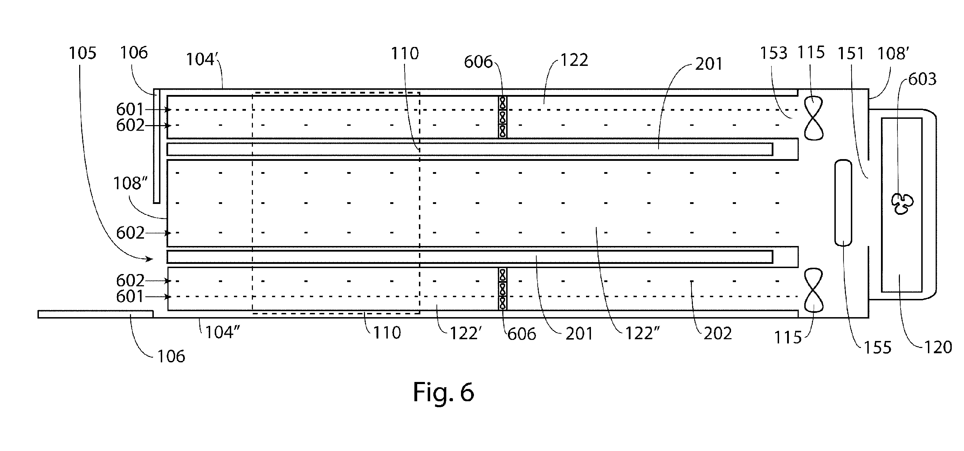

Fig. 6 shows a schematic top view of the trailer 100, with the ceiling 103 removed and the spacer elements 302 not shown. Close to the side walls 104 there are rows 601 of many air holes 202 for passing air along the side walls 104. Distributed over the air channels 122 there are less dense rows 602 of air holes 202 for passing air passed along the ceiling 103 into the cargo space 101 so as to evenly distribute air into said cargo space 101.

The bulkhead 151 acts as a manifold, passing air from the airco 120 into the channels 122. The airco 120 has a fan 603 to take in air from the cargo space 101 via inlet 121 (Fig. 1) and pass it via outlet opening 152 into the bulkhead 151. To promote the flow of air through the rows 601 of air holes 202, further fans 115 are provided. Further fans 115 can be operated independent of the airco 120, and allow circulation of air through the cargo space independent of the operation of the airco 120. This allows the heat capacity of the cargo to be used to maintain the cargo at the desired temperature, because the circulation helps to avoid undesired local deviations outside the acceptable temperature range for the cargo. The hole 155 is provided in the bulkhead 151 to bypass the airco 120. This allows recirculation of air without passing the airco 120, which saves energy necessary for recirculation.

To promote the flow of air through the air channels 122, 122' fans 606 such as those known for desktop computer, may be positioned inside said air channels 122 to facility throughput through the air channels 122 and thus promote a proper distribution of air through the cargo space so as to help to avoid local temperature excursions outside the desired range.

Air will be passed through the air channel 122" if the fan 603 is operated, but for the best control in accordance with the invention it has its own further fan 115 (not shown in Fig. 6).

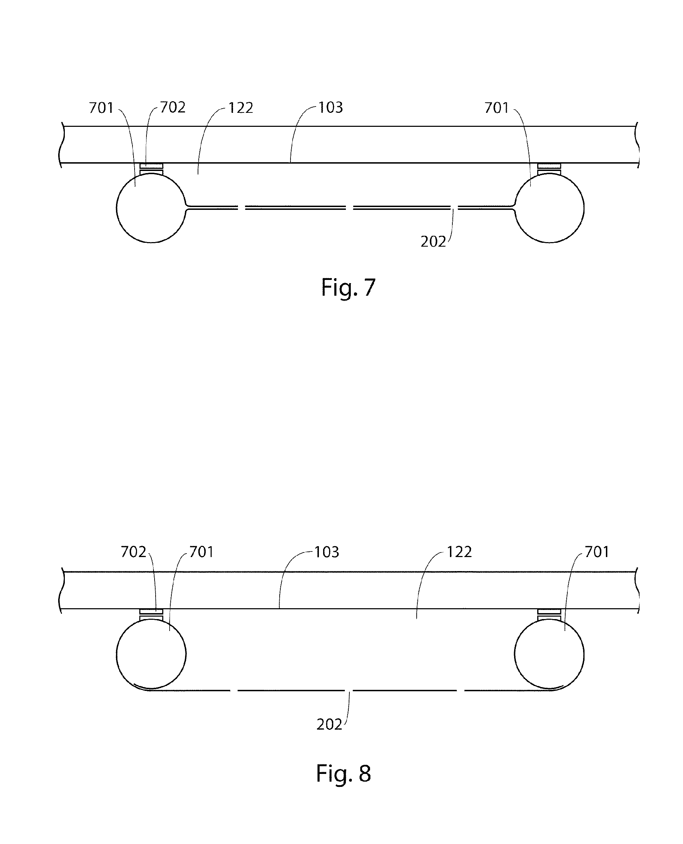

Fig. 7 shows a cross-sectional view through an alternative longitudinally extending air channel 122 comprising two pressurised longitudinally extending tubes 701 made from a single large tube by sealing opposite portions of said single large tube together and providing the sealed together portions with air holes 202. The longitudinally extending air channel 122 according to this embodiment is very light and highly compressible by the upper edge 401 of the compartmentalisation door 110. This upper edge 401 can be simpler. The longitudinally extending air channel 122 may be closed more effectively.

The longitudinally extending air channel 122 is attached to the ceiling 103 using Velcro® 602, one band 702 of which may be stapled to the ceiling 103.

Fig. 8 is similar to Fig. 7 and shows a cross-sectional view through an alternative longitudinally extending air channel 122 comprising two pressurised longitudinally extending tubes 701 made from a single large sheet by sealing or gluing portions of said single large sheet together. In the embodiments of Fig. 7 and Fig. 8 the lumen of the longitudinally extending air channel 122 is defined by ceiling 103.

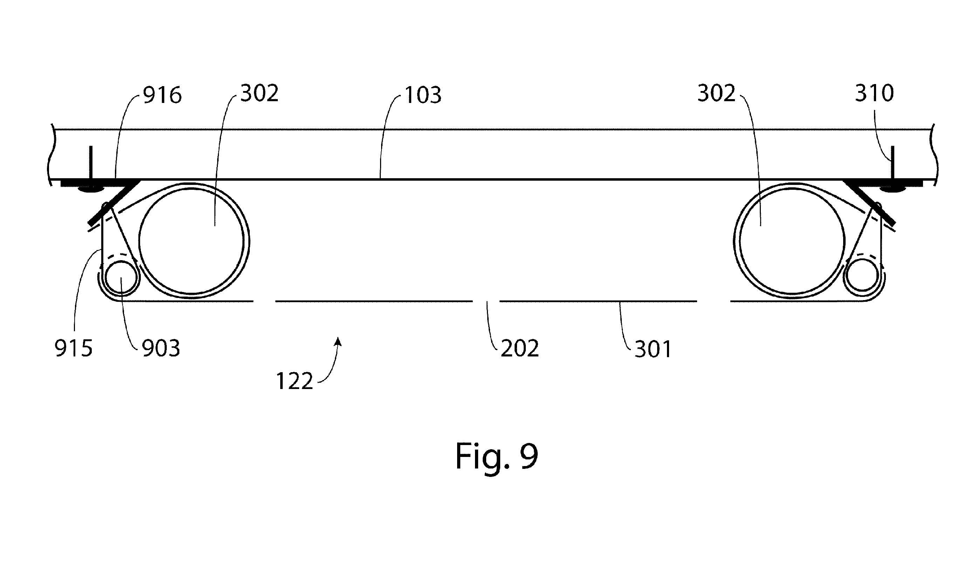

Fig. 9 shows a cross-sectional view through a longitudinally extending channel 122 used in a vehicle 100 according to the present invention. It comprises a flexible sheet 301 that is not tubular yet easy to attach to the ceiling 103. The flexible sheet 301 is kept taut by folding it around the spacer elements 302 of resilient foam and rigid tubular elements 903 (e.g. the same as the metal tubular core 303 of Fig. 3). The rigid tubular elements 903 are pulled towards the ceiling 103 by rope or rubber bands 915 where they are attached to hooks 916, whereas the resilient foam of the spacer elements 302 pushes the flexible sheet 301 and thus the rigid tubular elements 903 away from the ceiling 103. The flexible nature of the spacer element 302 allows the compartmentalisation door 110 to substantially close the longitudinally extending channels 122.

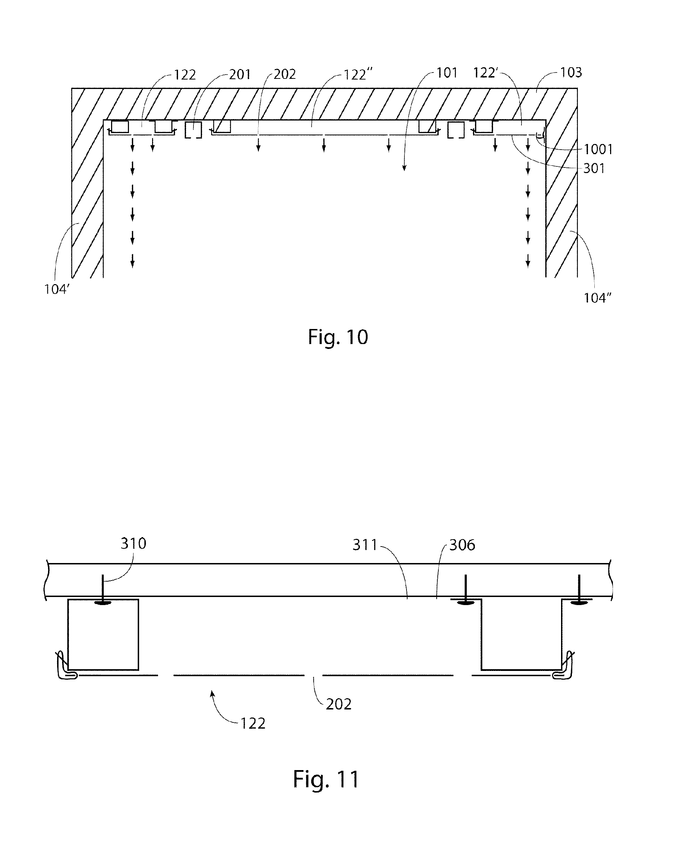

Fig. 10 shows an alternative partial, transverse cross-sectional view through the trailer 100 of Fig. 1, detailing ceiling 103 which is provided with guides 201 for moving the compartmentalisation door 110. The guides 201 extend longitudinally through the cargo space 101.

The ceiling 103 is also provided with three longitudinally extending channels 122. Longitudinally extending channel 122' adjacent to the side wall 104" is co-defined by said side wall 104" because the flexible sheet 301 has been connected to it using a zig-zagging, elastic string 1001 extending in a longitudinally direction of the trailer alternately going through eyelets 1002 and holes in the flexible sheet 301 like a shoe lace.

By way of example the beams 302' of air channel 122" are integral part of the ceiling 103.

Fig. 11 shows a longitudinally extending air channel 122 that can be constructed easily. Spacer elements 302 that are for example U-shaped or have a square cross-section are attached to ceiling 103. The spacer elements 302 have hooks 1101. Rubber bands 915 are used to keep the flexible sheet 301 taut.

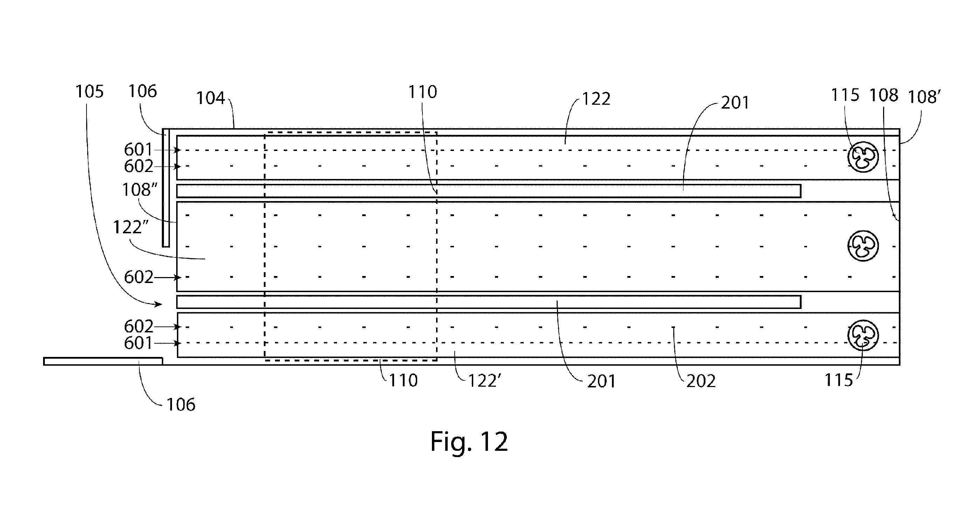

Fig. 12 shows an alternative trailer 100 without airco. This mode can be used for transport over relatively short distances for cargo that can be (e.g. butter). It will slowly warm during transport, but the cargo will warm substantially uniform, so all of the cargo can remain below the desired (or prescribed) temperature. With the aid of PCM materials transport over longer distances is achieveable. For example, the cargo may be loaded and unloaded on PCM-containing trolleys. The PCM materials are preferably cooled by a land-based cooling station or cooling chamber, that will use electricity instead of costly fuel for vehicles, such as diesel. The further fans 115 symbolically indicated in Fig. 12 are radial fans included in the longitudinally extending air channels 122, saving cargo space.

The present invention may be varied within the scope of the appending claims. The longitudinally extending air channels 122 preferably run to the second transversely extending upright wall (generally the doors at the back of the vehicle) where they are open. Preferably a baffle is provided for guiding the air downwardly along the second transversely extending upright wall to intercept heat exchange with the cargo there. This will work when the compartmentalisation door is not in use.

## Claims

1. A freight transport vehicle (100) for climate-controlled transport of cargo, the freight transport vehicle (100) having a front end and a back end, the freight transport vehicle (100) comprising
- a cargo space (101) defined by
- a floor (102),
- a first longitudinally extending upright wall (104'),
- a second longitudinally extending upright wall (104"),
- a first transversely extending upright wall (108') away from the back end,
- a second transversely extending upright wall (108") at a distance from the first transversely extending upright wall (108') and away from the front end, and
- a ceiling (103);
- a longitudinally extending air channel (122) provided at the ceiling (103) inside the cargo space (101) and having
- an inlet;
- an air vent area for passing air from the longitudinally extending air channel (122) into the cargo space (101); and
- a fan (603) for circulating air through the cargo space (101), **characterized in that** the longitudinally extending air channel (122) has
- an inlet opening (153) in direct fluid connection with the cargo space (101); and
- a further fan (115) for passing air from the cargo space via said inlet opening (153) through the longitudinally extending air channel (122) to at least part of the air vent area back into the cargo space (101).

2. The freight transport vehicle (100) according to claim 1, wherein the freight transport vehicle comprises a climate-control system.

3. The freight transport vehicle (100) according to claim 1 or 2, wherein in projection of the flow-through area of longitudinally extending air channels (122) on the ceiling (103) at least 40% of the surface area of the ceiling (103) of the cargo space (101) is covered, more preferably at least 55%, and even more preferably at least 70%.

4. The freight transport vehicle (100) according to any of the preceding claims, wherein the air hole (202) surface area present in a first longitudinally extending span of 2 meters increases from the front end of the freight transport vehicle (100) to the back end thereof.

5. The freight transport vehicle (100) according to any of the preceding claims, wherein at least one of the longitudinally extending air channels comprises a phase change material.

6. The freight transport vehicle (100) according to any of the preceding claims, wherein the longitudinally extending air channel (122) is a longitudinally extending, flexible air channel (122).

7. The freight transport vehicle (100) according to claim 6, wherein the longitudinally extending air channel (122) comprises
- at least one longitudinally extending spacer element (302) at the ceiling, and
- a flexible sheet (301) under tension using said at least one longitudinally extending spacer element (302) as a support, a flow-through area of the longitudinally extending air channel (122) being defined by the at least one longitudinally extending spacer element (302) and the flexible sheet (301), wherein said flexible sheet (301) comprises air holes (202) in an area that is
- next to the at least one longitudinally extending spacer element (302), and
- parallel to the ceiling (103).

8. The freight transport vehicle (100) according to claim 7, wherein the ceiling (103) is provided with leaf springs for pushing a longitudinally extending spacer element (302) away from i) another longitudinally extending spacer element (302) co-defining the particular longitudinally extending air channel (122) or ii) a longitudinally extending upright wall (104) to which the flexible sheet (301) is connected.

9. The freight transport vehicle (100) according to claim 7, wherein at least one of the longitudinally extending spacer elements is an inflated plastic tube.

10. The freight transport vehicle (100) according to any of the claims 6 to 9, wherein the freight transport vehicle (100) comprises a compartmentalisation door (110) and a longitudinally extending guide for moving said compartmentalisation door (110) in said cargo space (101), wherein the compartmentalisation door (110) can be used as a third transversally extending upright wall present between the first transversely extending upright wall (108') and the second transversely extending upright wall (108") so as to define
- a first cargo space section (101') between the first transversely extending upright wall (108') and the compartmentalisation door (110), and
- a second cargo space section (101") between the compartmentalisation door (110) and the second transversely extending upright wall (108");
a first air vent area being located closer to said front end than a second air vent area so as to allow the first cargo section (101) to be ventilated if the compartmentalisation door (110) is placed between the first air vent area and the second air vent area.

11. The freight transport vehicle (100) according to claim 10, wherein at least one longitudinally extending spacer element (302) is a rigid longitudinal element (303, 903); and
in a vertical position the compartmentalisation door (110) has an upper edge (401), said upper edge (401) being provided with a recesses (402) for individually receiving the at least one rigid longitudinally extending spacer element (302).

12. The freight transport vehicle (100) according to any of the preceding claims, wherein the freight transport vehicle (100) comprises at least two of said longitudinally extending air channels, wherein two longitudinally extending air channels being adjacent to the two longitudinally extending upright walls are provided with a longitudinally extending row of air holes (202).
